# EUROPEAN PATENT APPLICATION

(11) **EP 4 621 566 A1**
(43) Date of publication of application: **24.09.2025**
(21) Application number: 24806263.0
(22) Date of filing: 17.04.2024
(51) Int. Cl.: G06F 9/451

(54) **DISPLAY METHOD AND ELECTRONIC DEVICE**

(30) Priority: 18.05.2023 CN 202310566050
(71) Applicant: Huawei Technologies Co., Ltd., Shenzhen, Guangdong 518129 (CN)
(72) Inventor: ZHU, Pei, Shenzhen Guangdong 518129 (CN)
(74) Representative: Epping - Hermann - Fischer
(86) International application number: PCT/CN2024/088211
(87) International publication number: WO 2024/234906

(57) **Abstract**

This application discloses a display method and an electronic device, and relates to the field of terminal technologies. The method is applied to a terminal device that is placed in a landscape orientation. The method specifically includes: displaying a first application interface; and in response to a user operation performed on the first application interface, keeping the terminal device placed in a landscape orientation, and displaying the second application interface in a floating window, where the second application interface does not support display in the landscape orientation or supports only display in a portrait orientation. When the device is placed in the landscape orientation, and the newly started second application interface does not support display in the landscape orientation, the second application interface may be started in a form of floating window, so that a user does not need to rotate the device, it is ensured that browsing experience is not interrupted, and user experience is improved.

## Description

### TECHNICAL FIELD

This application relates to the field of terminal technologies, and in particular, to a display method and an electronic device.

### BACKGROUND

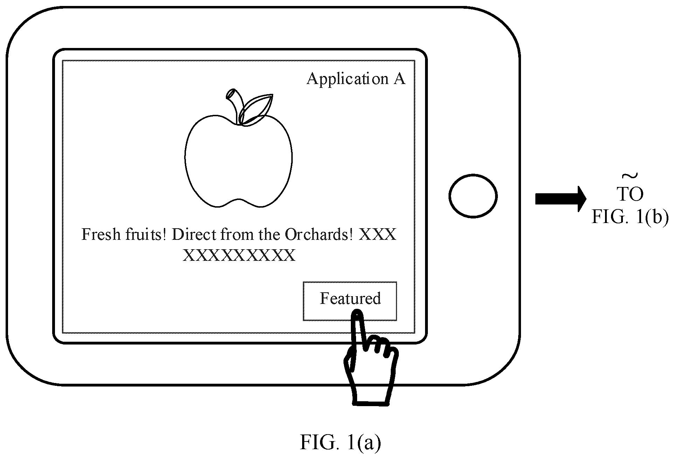

Currently, various applications may be installed on terminal devices such as mobile phones and tablet computers to provide users with rich audio-visual entertainment experience. As shown in FIG. 1(a) to FIG. 1(c), a user places a terminal device in a landscape orientation, and an interface of an application A is displayed in the landscape orientation. The user taps a control on the interface of the application A to jump to an interface of an application B (the interface of the application B does not support display in a landscape orientation). Then, the interface of the application B is displayed in full screen in a portrait orientation of the device and cover the original interface of the application A. In this case, the user needs to rotate the terminal device to obtain better visual experience. This interrupts smooth user experience.

### SUMMARY

This application provides a display method and an electronic device. When a specified display orientation of an application interface is different from an orientation in which the device is placed, the application interface may be directly started in a floating-window mode, and a user does not need to manually adjust the orientation in which the device is placed, so that user experience is improved.

According to a first aspect, an embodiment of this application provides a display method. The method includes: displaying a first application interface on a terminal device, where the application interface includes a control for triggering start of a second interface; receiving a user operation performed on the control; and when the second application interface does not support display in a landscape orientation or supports only display in a portrait orientation, displaying the second application interface in the landscape orientation in a floating window in response to the user operation.

The second application interface is set to support only display in the portrait orientation or not support display in the landscape orientation. Therefore, a browsing direction of the second application interface is different from an orientation in which the device is placed. According to the method provided in this embodiment of this application, the second application interface may be displayed in the landscape orientation in the floating window, so that the display orientation of the application interface in the floating window is consistent with a display orientation of a terminal device system, and the user does not need to manually adjust the orientation in which the device is placed, so that user experience is improved.

With reference to the first aspect, in a possible implementation, the second application interface does not support an app multiplier mode either.

In this implementation, the second application interface does not support display in the landscape orientation or the app multiplier mode. In this case, the second application interface is started in a floating-window mode, so that the second application interface can be displayed in the landscape orientation, the user does not need to rotate the orientation in which the terminal device is placed, and browsing experience of the user is not interrupted. With reference to the first aspect, in another possible implementation, the first application interface belongs to a first application, the second application interface belongs to a second application, and the first application and the second application are different.

In this implementation, the first application interface and the second application interface belong to different applications, so that consistency of the browsing experience of the user in a cross-application scenario is implemented.

With reference to the first aspect, in another possible implementation, the first application interface and the second application interface belong to a same application.

In this implementation, the first application interface and the second application interface belong to the same application, so that consistency of the browsing experience of the user in a cross-application scenario is implemented.

With reference to the first aspect, in another possible implementation, before starting the second application interface in the floating-window mode in response to the user operation, the terminal device obtains configuration information of the second application interface, where the configuration information indicates whether the second application interface supports floating-window display.

In this implementation, the terminal device determines, by obtaining the configuration information of the second application interface, whether the second application interface supports floating-window display. If floating-window display is supported, the second application interface is started in the floating-window mode.

With reference to the first aspect, in another possible implementation, the configuration information of the second application interface further indicates whether the second application interface supports app multiplier, or the configuration information of the second application interface further indicates that the second application interface does not support display in the landscape orientation or supports only display in the portrait orientation.

After obtaining the configuration information of the second application interface, the terminal device determines a start mode of the second application interface based on a capability that is of the second application interface and that is indicated by the configuration information and the orientation of the terminal device. When the terminal is placed in a landscape orientation, and the second application interface does not support the app multiplier start mode, does not support display in the landscape orientation, and supports floating-window display, content of the second application interface may be displayed in the landscape orientation in the floating window.

With reference to the first aspect, in another possible implementation, before the displaying the second application interface in a floating window, the method further includes: obtaining start mode combination information, where the start mode combination information indicates to start the second application interface in the floating-window mode when jumping from the first application interface to the second application interface; and displaying the second application interface in the floating window based on the start mode combination information.

In this implementation, the preset start mode combination information already indicates, without determining performed by the terminal device, that the second application interface is started in the floating-window mode when an interface is jumped from the first application interface to the second application interface.

With reference to the first aspect, in another possible implementation, the start mode combination information is generated based on previous selection of the user, or the start mode combination information is preset through system settings.

In this implementation, the terminal device may record the selection made by the user when the user starts the second application interface last time, and save the selection, so that the interface can be directly started in a user-preferred manner subsequently. Alternatively, the user may set, in the system settings, that the second application interface is started in a specific manner when the second application interface is started from the first application interface. Alternatively, the user may set that, provided that the second application interface is started, the second application interface is started in a specific fixed manner regardless of whether the second application interface is triggered from a home screen or triggered from the first application.

With reference to the first aspect, in another possible implementation, the first application interface is a home screen, and the user operation is an operation of tapping an application icon on the home screen, or the user operation is an operation of tapping a system notification.

In this implementation, the user may tap a specific application on the home screen to trigger start of the second application interface. Alternatively, when a user notification is received, the user taps/drags the notification to trigger start of the second application interface.

With reference to the first aspect, in another possible implementation, the first application interface is an interface of the first application, and the user operation is an operation of tapping a specific control on the first application interface.

In this implementation, the user first starts the first application interface that belongs to the first application, and then taps the control on the application interface to trigger start of the second application interface.

With reference to the first aspect, in another possible implementation, the method further includes: in response to the user operation, creating a task stack, and placing the second application interface in the created task stack.

In this implementation, when the second application interface is started, the task stack needs to be created, and the second application interface is placed in the created task stack. In this way, a task can be separately managed, and the user can also view the task by using the task manager.

According to a second aspect, this application provides a terminal device. The terminal device includes one or more processors and one or more memories. The one or more memories are coupled to the one or more processors. The one or more memories are configured to store computer program code, the computer program code includes computer instructions, and the one or more processors invoke the computer instructions, to enable the electronic device is enabled to perform the method according to any one of the first aspect.

According to a third aspect, this application provides a computer-readable storage medium, including instructions. When the instructions are run on an electronic device, the electronic device is enabled to perform the method according to any one of the first aspect.

According to a fourth aspect, this application provides a computer program product. When the computer program product runs on an electronic device, the electronic device is enabled to perform the method according to any one of the first aspect.

### BRIEF DESCRIPTION OF DRAWINGS

FIG. 1(a) to FIG. 1(c) are diagrams for the background according to an embodiment of this application;
FIG. 2 is a diagram of hardware of a terminal device according to an embodiment of this application;
FIG. 3 is a diagram of a software architecture of a terminal device according to an embodiment of this application;

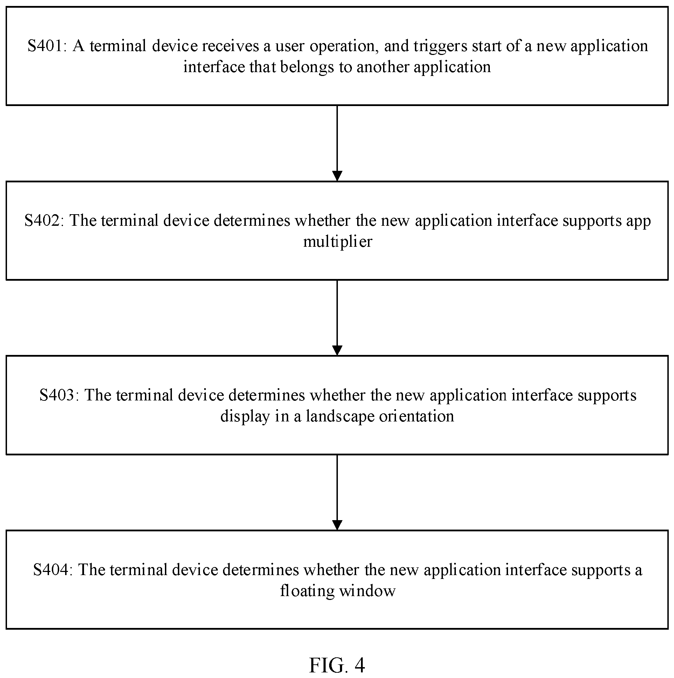

FIG. 4 is a schematic flowchart of a method in Scenario 1 according to an embodiment of this application;
FIG. 5(a) and FIG. 5(b) are diagrams of saving a start mode combination according to an embodiment of this application;
FIG. 6 is a schematic flowchart of a method in Scenario 2 according to an embodiment of this application;
FIG. 7 is a diagram of app multiplier according to an embodiment of this application;
FIG. 8(a) and FIG. 8(b) are diagrams of a scenario in which a new interface is started across applications according to an embodiment of this application;
FIG. 9(a) and FIG. 9(b) are diagrams of a scenario in which a new interface is started in an application according to an embodiment of this application;
FIG. 10 is a schematic flowchart of starting a new interface according to an embodiment of this application;
FIG. 11 is a schematic flowchart of saving a start mode combination selected by a user according to an embodiment of this application; and
FIG. 12 is a schematic flowchart of saving or deleting a start mode combination according to an embodiment of this application.

### DESCRIPTION OF EMBODIMENTS

The following describes technical solutions in embodiments of this application with reference to accompanying drawings in embodiments of this application. In descriptions in embodiments of this application, "/" means "or" unless otherwise specified. For example, A/B may represent A or B. In this specification, "and/or" describes only an association relationship for describing associated objects and represents that three relationships may exist. For example, A and/or B may represent the following three cases: Only A exists, both A and B exist, and only B exists. In addition, in the descriptions in embodiments of this application, "a plurality of" means two or more.

The following terms "first" and "second" are merely intended for a purpose of description, and shall not be understood as an indication or implication of relative importance or implicit indication of a quantity of indicated technical features. Therefore, a feature limited by "first" or "second" may explicitly or implicitly include one or more features. In the descriptions of embodiments, unless otherwise specified, "a plurality of" means two or more. In addition, objects modified by different prefix words may be the same or different. For example, if a described object is a "device", a "first device" and a "second device" may be devices of a same type or devices of different types. For another example, if a described object is "information", "first information" and "second information" may be information of same content or information of different content. In conclusion, in embodiments of this application, use of the prefix words, for example, ordinal numbers, used to distinguish between the described objects constitutes no limitation on the described objects. For descriptions of the described objects, refer to context descriptions in claims or embodiments. Use of the prefix words should not constitute a redundant limitation.

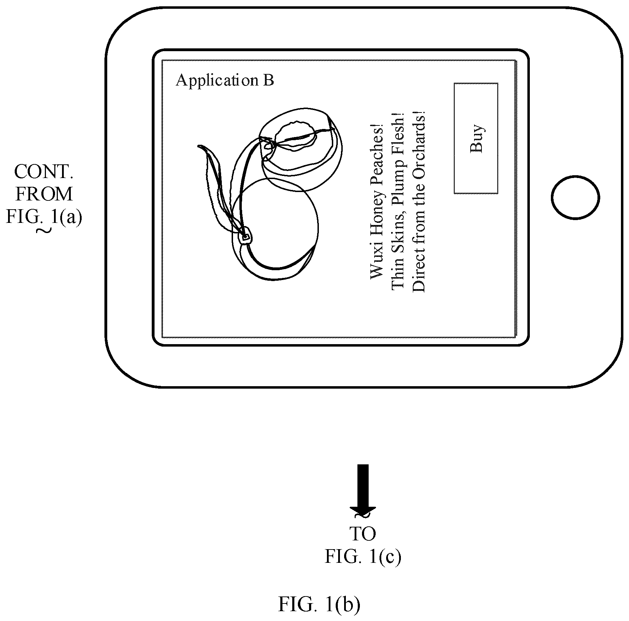

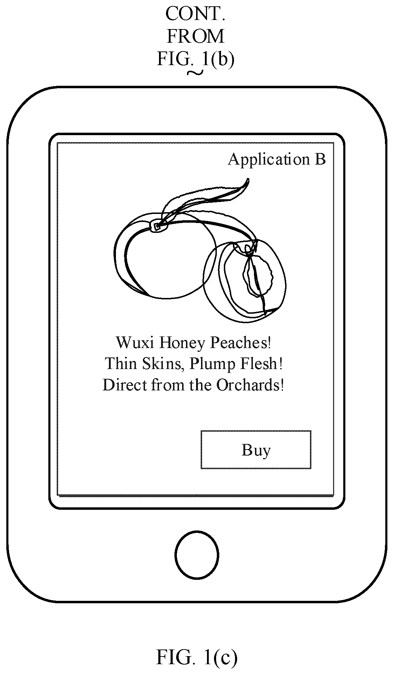

Before embodiments provided in this application are described, the following terms are first defined and explained:
Placement of a device in a landscape/landscape orientation: A width of a terminal device is greater than a height of the terminal device from a current viewing angle of a user. A tablet device is used as an example, as shown in FIG. 1(a) and FIG. 1(b).
Placement of a device in a portrait/portrait orientation: A width of a terminal device is less than a height of the terminal device from a current viewing angle of a user. A tablet device is used as an example, as shown in FIG. 1(c).

Display of an application interface in a landscape/landscape/landscape orientation: As shown in an interface of an application A in FIG. 1(a), a browsing angle of the interface is the same as a browsing angle of a terminal device which is placed in a landscape orientation. In other words, when the device is placed in the landscape orientation, the application interface may be normally browsed. In some embodiments, the application may obtain a system orientation, and then control a display orientation of the application interface to be consistent with the system orientation. The foregoing system orientation may be specifically understood as follows: When the device is placed in the landscape orientation, the system orientation is landscape/landscape (landscape). In some embodiments, for application interfaces of some applications, display orientations of the application interfaces are set to only display in a landscape/landscape/landscape orientation or set to only display in a portrait/portrait/portrait orientation.

Display of an application interface in a portrait/portrait/portrait orientation: As shown in an interface of an application B in FIG. 1(b) and FIG. 1(c), a browsing angle of the interface is the same as a browsing angle of a terminal device which is placed in a portrait orientation. In other words, when the device is placed in the portrait orientation, the application interface may be normally browsed. In some embodiments, the application may obtain a system orientation, and then control a display orientation of the application interface to be consistent with the system orientation. The foregoing system orientation may be specifically understood as follows: When the device is placed in the portrait orientation, the system orientation is portrait/portrait (portrait). In some embodiments, for application interfaces of some applications, display orientations of the application interfaces are set to only display in a landscape/landscape/landscape orientation or set to only display in a portrait/portrait/portrait orientation.

Task stack: A task stack includes a plurality of activities (activities). A single application interface may be understood as one activity. In embodiments provided in this application, the activity may also be referred to as an application component.

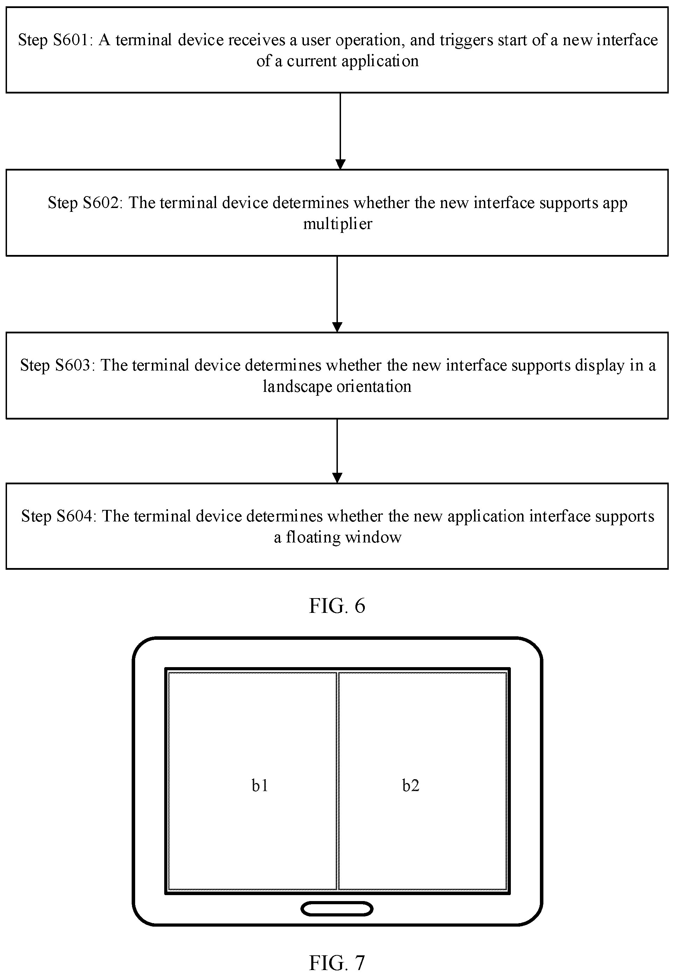

App multiplier: In embodiments of this application, a diagram of the app multiplier is shown in FIG. 7. Two pages b1 and b2 belong to associated pages, and b1 and b2 belong to a same application. For example, the app multiplier may include a navigation mode or a shopping mode. The navigation mode specifically means that, when a new page is opened on the page b1, the new page may be added to a right area for display, that is, the page b2 may be overlaid; and when a new page is opened on the page b2, the new page may be added to the right area for display, that is, the original page b2 may be overlaid. The shopping mode specifically means that, when a new page is opened on the page b 1, the new page may be added to a right area for display, and the original page b2 is moved to a left area for display, that is, the original page b1 is overlaid; and when a new page is opened on the page b2, the new page may be added to the right area for display, that is, the original page b2 is overlaid. It should be noted that, when there is only one page and a page start mode is an app multiplier mode, the page may be displayed in the center, with blank space or a blur applied on both sides of a screen.

Currently, when using a terminal device, a user may browse page content in a landscape or portrait orientation of the device. For example, when the device is placed in a landscape orientation (and a current interface is also displayed in the landscape orientation), if the user taps a specific button to jump to a page, and a jumped-to page can only be displayed in a portrait orientation, the user needs to rotate the current device to continue browsing the jumped-to page. This interrupts smooth experience of the user. Therefore, this application provides a solution, so that split-screen/floating-window display can be directly performed in a preset scenario. Therefore, user experience can be improved in a cross-application scenario of a large-screen device or a cross-page scenario of an application.

The terminal device in embodiments of this application may include but is not limited to a smartphone, a netbook, a tablet computer, a smartwatch, a smart band, a phone watch, a smart camera, a palmtop computer, a personal computer (personal computer, PC), a personal digital assistant (personal digital assistant, PDA), a portable multimedia player (portable multimedia player, PMP), an augmented reality (augmented reality, AR)/virtual reality (virtual reality, VR) device, a television, a projection device, a somatic game console in a human-computer interaction scenario, or the like. Alternatively, the terminal device may be an electronic device that is of another type or structure and that has a camera. This is not limited in embodiments of this application.

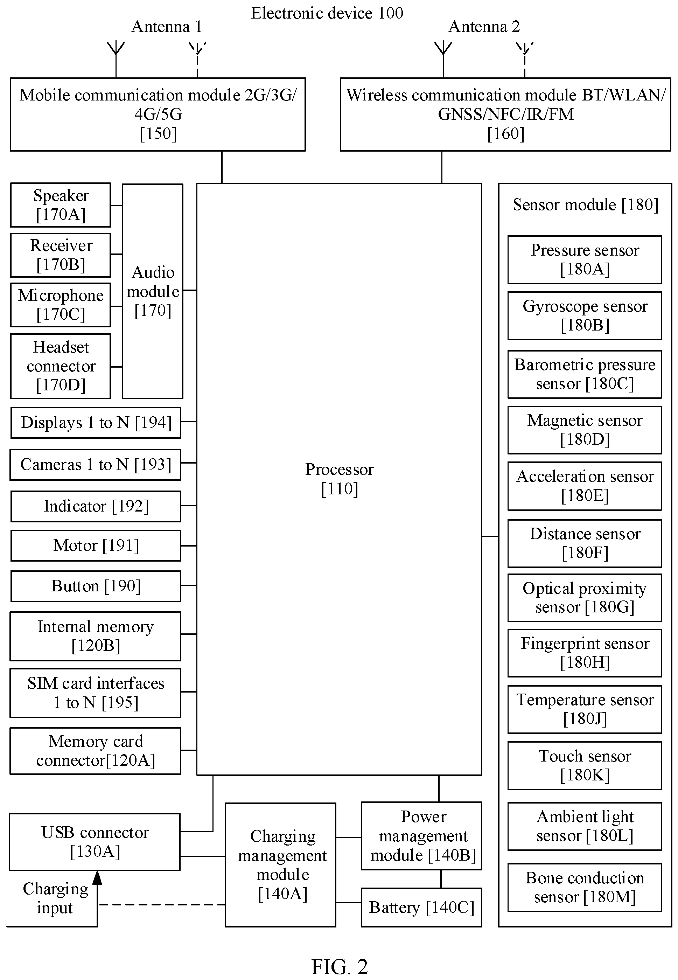

FIG. 2 is a diagram of a hardware structure of an electronic device according to an embodiment of this application. The electronic device 100 may be understood as the terminal device in embodiments of this application, and is configured to perform the method provided in embodiments of this application.

The electronic device 100 may include at least one of a mobile phone, a foldable electronic device, a tablet computer, a desktop computer, a laptop computer, a handheld computer, a notebook computer, an ultra-mobile personal computer, a netbook, a cellular phone, a PDA, an AR device, a VR device, an artificial intelligence device, a wearable device, a vehicle-mounted device, a smart home device, a smart city device, and the like. A type of the electronic device 100 is not specially limited in embodiments of this application.

The electronic device 100 may include a processor 110, an internal memory 121, a USB connector 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset connector 170D, a sensor module 180, a button 190, a motor 191, an indicator 192, a camera 193, a display 194, a memory card connector 120, a SIM card interface 195, and the like. The sensor module 180 may include a pressure sensor 180A, a gyroscope sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

The structure shown in this embodiment of this application does not constitute a limitation on the electronic device 100. In some other embodiments of this application, the electronic device 100 may include more or fewer components than those shown in the figure. The components shown in the figure may be implemented by hardware, software, or a combination of software and hardware. The processor 110 may include one or more processing units. For example, the processor 110 may include an application processor, a modem processor, a graphics processing unit (graphics processing unit, GPU), an image signal processor (image signal processor, ISP), a controller, a video codec, a digital signal processor (digital signal processor, DSP), a baseband processor, and/or a neural-network processing unit (neural-network processing unit, NPU). Different processing units may be independent components, or may be integrated into one or more processors.

The processor 110 may generate an operation control signal based on instruction operation code and a time sequence signal, to complete control of instruction fetching and instruction execution. A memory may be further disposed in the processor 110, and is configured to store instructions and data. In some embodiments, the memory in the processor 110 may be a cache. The memory may store instructions or data that has been used or frequently used by the processor 110.

In some embodiments, the processor 110 may include one or more interfaces. The interface may include an inter-integrated circuit I2C interface, an I2S interface, a PCM interface, a UART interface, an MIPI, a GPIO interface, a SIM interface, and/or a USB interface. The processor 110 may be connected to modules such as the touch sensor, the audio module, the wireless communication module, the display, or the camera through at least one of the foregoing interfaces. It may be understood that an interface connection relationship between the modules shown in this embodiment of this application is merely an example for description, and does not constitute a limitation on the electronic device 100. In some other embodiments of this application, the electronic device 100 may alternatively use an interface connection manner different from that in the foregoing embodiment, or use a combination of a plurality of interface connection manners. The USB connector 130 is a connector that conforms to a USB standard specification, and may be configured to connect the electronic device 100 and a peripheral device. The USB connector 130 may be a mini USB connector, a micro USB connector, a USB Type-C connector, or the like. The USB connector 130 may be configured to connect to a charger, and charge the electronic device 100 by using the charger. The USB connector 130 may alternatively be configured to connect to another electronic device, to implement data transmission between the electronic device 100 and the another electronic device. The USB connector 130 may alternatively be configured to connect to a headset, to output, through the headset, audio stored in the electronic device. The connector may be further configured to connect to another electronic device, for example, a VR device. The charging management module 140 is configured to receive a charging input of the charger. The charger may be a wireless charger or a wired charger. In some embodiments of wired charging, the charging management module 140 may receive a charging input of the wired charger through the USB connector 130. In some embodiments of wireless charging, the charging management module 140 may receive a wireless charging input by using a wireless charging coil. When charging the battery 142, the charging management module 140 may further supply power to the electronic device 100 by using the power management module 141. The battery 142 may include at least one group of electrode terminals, and each group of electrode terminals includes at least one positive terminal. In an implementation, when the battery includes two groups of electrode terminals, the electronic device may configure two wired charging paths or two wireless charging paths, each wired or wireless charging path is connected to at least one group of electrode terminals, and the battery 142 is simultaneously charged through a plurality of charging paths. Therefore, charging power is increased, and temperature rise is reduced. In another implementation, when the battery includes two groups of electrode terminals, one group of electrode terminals is used for wired charging, and the other group of electrode terminals is used for wireless charging. A charging circuit layout is more flexible. Based on a same design concept, a person skilled in the art may configure more than two groups of electrode terminals and more than two charging paths according to a design requirement.

The power management module 141 is configured to connect to the battery 142, the charging management module 140, and the processor 110. The power management module 141 receives an input of the battery 142 and/or the charging management module 140, and supplies power to the processor 110, the internal memory 121, the display 194, the camera 193, and the like. The power management module 141 may be further configured to monitor parameters such as a battery capacity, a battery cycle count, and a battery health status (electric leakage or impedance). In some other embodiments, the power management module 141 may alternatively be disposed in the processor 110. In some other embodiments, the power management module 141 and the charging management module 140 may alternatively be disposed in a same component.

A wireless communication function of the electronic device 100 may be realized through the antenna 1, the antenna 2, the mobile communication module 150, the wireless communication module 160, the modem processor, the baseband processor, and the like.

The antenna 1 and the antenna 2 are configured to transmit and receive an electromagnetic wave signal. Each antenna in the electronic device 100 may be configured to cover one or more communication frequency bands. Different antennas may be further reused, to improve antenna utilization. For example, the antenna 1 may be reused as a diversity antenna of a wireless local area network. In some other embodiments, the antenna may be used in combination with a tuning switch.

The mobile communication module 150 may provide at least one solution, applied to the electronic device 100, to wireless communication including 2G, 3G, 4G, 5G, 6G, or the like. The mobile communication module 150 may include at least one filter, switch, power amplifier, low noise amplifier, and the like. The mobile communication module 150 may perform processing such as filtering or amplification on an electromagnetic wave received by the antenna 1, and transmit a processed electromagnetic wave to the modem processor for demodulation. The mobile communication module 150 may further amplify a signal modulated by the modem processor, and convert an amplified signal into an electromagnetic wave for radiation through the antenna 1. In some embodiments, at least some functional modules of the mobile communication module 150 may be disposed in the processor 110. In some embodiments, at least some functional modules of the mobile communication module 150 may be disposed in a same component as at least some modules of the processor 110.

The modem processor may include a modulator and a demodulator. The modulator is configured to modulate a to-be-sent low-frequency baseband signal into a medium-high frequency signal. The demodulator is configured to demodulate a received electromagnetic wave signal into a low-frequency baseband signal. Then, the demodulator transmits the low-frequency baseband signal obtained through demodulation to the baseband processor for processing. The low-frequency baseband signal is processed by the baseband processor and then transmitted to the application processor. The application processor outputs a sound signal by using an audio device (which is not limited to the speaker 170A, the receiver 170B, or the like), or displays an image or a video through the display 194. In some embodiments, the modem processor may be an independent component. In some other embodiments, the modem processor may be independent of the processor 110, and is disposed in a same component as the mobile communication module 150 or another functional module.

The wireless communication module 160 may provide a wireless local area network module, a Bluetooth module, a BLE module, an ultra-wideband (ultra wide band, UWB) module, a global navigation satellite system (global navigation satellite system, GNSS) module, an FM module, a near field wireless communication (near field communication, NFC) module, an infrared module, or the like that is included and that is applied to the electronic device 100. The wireless communication module 160 may be one or more components integrating at least one communication processing module. The wireless communication module 160 receives an electromagnetic wave through the antenna 2, performs frequency modulation and filtering processing on the electromagnetic wave signal, and sends a processed signal to the processor 110. The wireless communication module 160 may further receive a to-be-sent signal from the processor 110, perform frequency modulation and amplification on the signal, and convert a modulated and amplified signal into an electromagnetic wave for radiation through the antenna 2. In some embodiments, in the electronic device 100, the antenna 1 is coupled to the mobile communication module 150, and the antenna 2 is coupled to the wireless communication module 160, so that the electronic device 100 can communicate with another electronic device by using a wireless communication technology. The wireless communication technology may include technologies such as GSM, GPRS, CDMA, WCDMA, TD-SCDMA, LTE, BT, GNSS, WLAN, NFC, FM, and/or IR. The GNSS may include a GPS, a global navigation satellite system (global navigation satellite system, GLONASS), a BeiDou navigation satellite system (BeiDou navigation satellite system, BDS), a quasi-zenith satellite system (quasi-zenith satellite system, QZSS), and/or a satellite based augmentation system (satellite based augmentation system, SBAS).

The electronic device 100 may realize a display function through the GPU, the display 194, the application processor, and the like. The GPU is a microprocessor for image processing, and is connected to the display 194 and the application processor. The GPU is configured to: perform mathematical and geometric computation, and render an image. The processor 110 may include one or more GPUs that execute program instructions to generate or change display information. The display 194 is configured to display an image, a video, and the like. In some embodiments, the electronic device 100 may include one or more displays 194. The display 194 may be at least one of an LCD, an OLED display, an AMOLED display, an FLED display, a mini-LED display, a micro-LED display, a micro-OLED display, a quantum dot light-emitting diode (quantum dot light-emitting diode, QLED) display, and the like.

The electronic device 100 may realize an image shooting function through the camera module 193, the ISP, the video codec, the GPU, the display 194, the application processor (AP), the neural-network processing unit (NPU), and the like.

The camera module 193 may be configured to collect color image data and depth data of a photographed object. The ISP may be configured to process the color image data collected by the camera module 193. For example, during image shooting, a shutter is pressed, and light is transmitted to a photosensitive element of the camera through a lens. An optical signal is converted into an electrical signal, and the photosensitive element of the camera transmits the electrical signal to the ISP for processing, to convert the electrical signal into a visible image. The ISP may further perform algorithm optimization on noise, brightness, and complexion of the image. The ISP may further optimize parameters such as exposure and a color temperature of a photographing scenario. In some embodiments, the ISP may be disposed in the camera module 193.

In some embodiments, the camera module 193 may include a color camera module and a 3D sensing module.

In some embodiments, a photosensitive element of a camera of the color camera module may include a CCD or a CMOS phototransistor. The photosensitive element converts an optical signal into an electrical signal, and then transmits the electrical signal to the ISP to convert the electrical signal into a digital image signal. The ISP outputs the digital image signal to the DSP for processing. In some embodiments, the 3D sensing module may be a structured light 3D sensing module. The structured light 3D sensing module may include an infrared transmitter, an infrared camera module, and the like. The structured light 3D sensing module first emits a light spot of a specific pattern onto a photographed object, and then receives a light spot pattern code on a surface of the object, to further compare the light spot pattern with an original projected light spot, and determine three-dimensional coordinates of the object. The three-dimensional coordinates may include a distance between the electronic device 100 and the photographed object. The 3D sensing module may obtain a distance (namely, a depth) between the 3D sensing module and the photographed object by using time of turning back an infrared ray, to obtain a 3D depth-of-field image.

The structured light 3D sensing module may be further used in fields such as facial recognition, a somatic game console, and industrial machine vision detection. The 3D sensing module may be further used in fields such as a game console, AR, and VR.

In some other embodiments, the camera module 193 may further include two or more cameras. The two or more cameras may include a color camera, and the color camera may be configured to collect color image data of the photographed object. The two or more cameras may collect depth data of the photographed object by using a stereo vision technology.

In some embodiments, the electronic device 100 may include one or more camera modules 193. The electronic device 100 may include one front-facing camera module 193 and one rear-facing camera module 193. The front-facing camera module 193 may be configured to collect color image data and depth data of a photographer, and the rear-facing camera module may be configured to collect color image data and depth data of a photographed object (such as a character or a scenery) facing the photographer.

The video codec is configured to compress or decompress a digital video. The electronic device 100 may support one or more video codecs. In this way, the electronic device 100 may play or record videos in a plurality of encoding formats, for example, MPEG-1, MPEG-2, MPEG-3, and MPEG-4.

The NPU is a neural-network (neural-network, NN) computing processor. The NPU quickly processes input information by referring to a structure of a biological neural network, for example, a transfer mode between human brain neurons, and may further continuously perform self-learning. The NPU may be used to implement applications such as intelligent cognition of the electronic device 100, for example, image recognition, facial recognition, voice recognition, and text understanding.

The memory card connector 120 may be configured to connect to a memory card, for example, a micro SD card or a nano SD card, to extend a storage capability of the electronic device 100. The memory card communicates with the processor 110 through the memory card connector 120, to realize a data storage function. In some implementations, the memory card and the SIM card may share a same connector in a time-sharing manner, and the electronic device may identify that the card disposed in the connector is the memory card or the SIM card, to realize a corresponding function. Alternatively, the memory card and the SIM card may be both disposed in a same connector, and are electrically connected to different springs of the electronic device 100, to separately realize a storage function and a SIM function.

The internal memory 121 may be configured to store computer-executable program code. The executable program code includes instructions. The internal memory 121 may include a program storage area and a data storage area. The program storage area may store an operating system, an application required by at least one function (for example, a sound playing function and an image playing function), and the like. The data storage area may store data (for example, audio data and an address book) and the like created during use of the electronic device 100. In addition, the internal memory 121 may include a high-speed random access memory, or may include a nonvolatile memory, for example, at least one magnetic disk storage device, a flash memory, or a universal flash storage (universal flash storage, UFS). The processor 110 runs the instructions stored in the internal memory 121 and/or instructions stored in the memory disposed in the processor, to perform various function methods or data processing of the electronic device 100. The electronic device 100 may realize an audio function, for example, music playing or recording, by using the audio module 170, the speaker 170A, the receiver 170B, the microphone 170C, the headset connector 170D, the application processor, and the like.

The audio module 170 is configured to convert digital audio information into an analog audio signal for output, and is also configured to convert an analog audio input into a digital audio signal. The audio module 170 may be further configured to encode and decode an audio signal. In some embodiments, the audio module 170 may be disposed in the processor 110, or some functional modules in the audio module 170 are disposed in the processor 110.

The speaker 170A, also referred to as a "loudspeaker", is configured to convert an audio electrical signal into a sound signal. The electronic device 100 may be used to listen to music or output an audio signal of a hands-free call through the speaker 170A.

The receiver 170B, also referred to as an "earpiece", is configured to convert an electrical audio signal into a sound signal. When a call is answered or voice information is received by using the electronic device 100, the receiver 170B may be put close to a human ear to listen to a voice.

The microphone 170C, also referred to as a "mike" or a "mic", is configured to convert a sound signal into an electrical signal. When making a call or sending voice information, a user may make a sound near the microphone 170C, to input a sound signal to the microphone 170C. At least one microphone 170C may be disposed in the electronic device 100. In some other embodiments, more than two microphones 170C may be disposed in the electronic device 100, to further realize a noise reduction function in addition to collecting a sound signal. In some other embodiments, the electronic device 100 may further identify a sound source through the microphone, to realize a directional recording function and the like.

The headset connector 170D is configured to connect to a wired headset. The headset connector 170D may be the USB connector 130, or may be a 3.5 mm connector that conforms to an open mobile terminal platform (open mobile terminal platform, OMTP) standard or a connector that conforms to a cellular telecommunications industry association of the USA (cellular telecommunications industry association of the USA, CTIA) standard.

The pressure sensor 180A is configured to sense a pressure signal, and can convert the pressure signal into an electrical signal. In some embodiments, the pressure sensor 180A may be disposed on the display 194. The pressure sensor 180A

The gyroscope sensor 180B may be configured to determine a motion posture of the electronic device 100. In some embodiments, angular velocities of the electronic device 100 around three axes (namely, axes x, y, and z) may be determined by using the gyroscope sensor 180B. The gyroscope sensor 180B may be configured to implement image stabilization during image shooting. For example, when a shutter is pressed, the gyroscope sensor 180B detects an angle at which the electronic device 100 jitters, calculates, based on the angle, a distance for which a lens module needs to compensate, and controls reverse motion of the lens to cancel the jitter of the electronic device 100, to implement image stabilization. The gyroscope sensor 180B may be further used in a navigation scenario and a somatic game scenario.

The barometric pressure sensor 180C is configured to measure barometric pressure. In some embodiments, the electronic device 100 calculates an altitude based on a barometric pressure value measured by the barometric pressure sensor 180C, to assist in positioning and navigation.

The magnetic sensor 180D includes a Hall sensor. The electronic device 100 may detect opening and closing of a flip leather case by using the magnetic sensor 180D. When the electronic device is a foldable electronic device, the magnetic sensor 180D may be configured to detect folding or unfolding, or a folding angle of the electronic device. In some embodiments, when the electronic device 100 is a flip phone, the electronic device 100 may detect opening and closing of a flip cover by using the magnetic sensor 180D. Further, a feature such as automatic unlocking of the flip cover is set based on a detected opening or closing state of the leather case or a detected opening or closing state of the flip cover.

The acceleration sensor 180E may detect accelerations in various directions (usually on three axes) of the electronic device 100. When the electronic device 100 is still, a magnitude and a direction of gravity may be detected. The acceleration sensor 180E may be further configured to identify a posture of the electronic device, and is used in an application such as switching between a landscape orientation and a portrait orientation or a pedometer.

The distance sensor 180F is configured to measure a distance. The electronic device 100 may measure the distance in an infrared manner or a laser manner. In some embodiments, in a photographing scenario, the electronic device 100 may measure a distance by using the distance sensor 180F, to implement quick focusing.

The optical proximity sensor 180G may include, for example, a light-emitting diode and an optical detector, for example, a photodiode. The light-emitting diode may be an infrared light-emitting diode. The electronic device 100 emits infrared light by using the light-emitting diode. The electronic device 100 detects infrared reflected light from a nearby object by using the photodiode. When intensity of the detected reflected light is greater than a threshold, the electronic device 100 may determine that there is an object near the electronic device 100. When intensity of the detected reflected light is less than a threshold, the electronic device 100 may determine that there is no object near the electronic device 100. The electronic device 100 may detect, by using the optical proximity sensor 180G, that the user holds the electronic device 100 close to an ear for a call, to automatically turn off a screen for power saving. The optical proximity sensor 180G may also be used in a smart cover mode or a pocket mode to automatically perform screen unlocking or locking. The ambient light sensor 180L may be configured to sense ambient light brightness. The electronic device 100 may adaptively adjust brightness of the display 194 based on the sensed ambient light brightness. The ambient light sensor 180L may also be configured to automatically adjust white balance during photographing. The ambient light sensor 180L may also cooperate with the optical proximity sensor 180G to detect whether the electronic device 100 is blocked, for example, the electronic device is in a pocket. When it is detected that the electronic device is blocked or is in a pocket, some functions (for example, a touch function) may be disabled, to prevent a misoperation. The fingerprint sensor 180H is configured to collect a fingerprint. The electronic device 100 may use a feature of the collected fingerprint to implement fingerprint-based unlocking, application lock access, fingerprint-based photographing, fingerprint-based call answering, and the like.

The temperature sensor 180J is configured to detect a temperature. In some embodiments, the electronic device 100 executes a temperature processing policy by using the temperature detected by the temperature sensor 180J. For example, when the temperature detected by the temperature sensor 180J exceeds a threshold, the electronic device 100 lowers performance of the processor, to reduce power consumption of the electronic device to implement thermal protection. In some other embodiments, when the temperature detected by the temperature sensor 180J is lower than another threshold, the electronic device 100 heats the battery 142. In some other embodiments, when the temperature is lower than still another threshold, the electronic device 100 may boost an output voltage of the battery 142.

The touch sensor 180K is also referred to as a "touch component". The touch sensor 180K may be disposed on the display 194, and the touch sensor 180K and the display 194 constitute a touchscreen, which is also referred to as a "touch screen". The touch sensor 180K is configured to detect a touch operation performed on or near the touch sensor. The touch sensor may transfer the detected touch operation to the application processor, to determine a type of the touch event. A visual output related to the touch operation may be provided through the display 194. In some other embodiments, the touch sensor 180K may also be disposed on a surface of the electronic device 100 at a location different from that of the display 194.

The bone conduction sensor 180M may obtain a vibration signal. In some embodiments, the bone conduction sensor 180M may obtain a vibration signal of a vibration bone of a human vocal-cord part. The bone conduction sensor 180M may also be in contact with a body pulse to receive a blood pressure beating signal. In some embodiments, the bone conduction sensor 180M may also be disposed in the headset, to obtain a bone conduction headset. The audio module 170 may parse out a voice signal based on the vibration signal that is of the vibration bone of the vocal-cord part and that is obtained by the bone conduction sensor 180M, to realize a voice function. The application processor may parse heart rate information based on the blood pressure beating signal obtained by the bone conduction sensor 180M, to realize a heart rate detection function.

The button 190 may include a power button, a volume button, and the like. The button 190 may be a mechanical button or a touch button. The electronic device 100 may receive a button input, and generate a button signal input related to a user setting and function control of the electronic device 100.

The motor 191 may generate a vibration prompt. The motor 191 may be configured to provide an incoming call vibration prompt and a touch vibration feedback. For example, touch operations performed on different applications (for example, photographing and audio playing) may correspond to different vibration feedback effects. The motor 191 may also correspond to different vibration feedback effects for touch operations performed on different areas of the display 194. Different application scenarios (for example, a time reminder, information receiving, an alarm clock, and a game) may also correspond to different vibration feedback effects. A touch vibration feedback effect may be further customized.

The indicator 192 may be an indicator light, and may be configured to indicate a charging status and a power change, or may be configured to indicate a message, a missed call, a notification, and the like.

The SIM card interface 195 may be a hardware module, and is configured to connect to a SIM card. The SIM card may be inserted into the SIM card interface 195 or removed from the SIM card interface 195, to implement contact with or separation from the electronic device 100. The electronic device 100 may support one or more SIM card interfaces. The SIM card interface 195 may support a nano-SIM card, a micro-SIM card, a SIM card, and the like. A plurality of cards may be inserted into a same SIM card interface 195 at the same time. The plurality of cards may be of a same type or different types. The SIM card interface 195 may be compatible with different types of SIM cards. The SIM card interface 195 may also be compatible with a memory card. The electronic device 100 interacts with a network through the SIM card, to realize functions such as making/answering a call and data communication. In some embodiments, the electronic device 100 uses an eSIM, namely, an embedded SIM card. The eSIM card may be embedded in the electronic device 100, and cannot be separated from the electronic device 100.

It may be understood that the structure shown in FIG. 2 in this application does not constitute a specific limitation on the terminal device in this application. In some other embodiments of this application, the terminal device may include more or fewer components than those shown in the figure, or some components may be combined, or some components may be split, or different component arrangements may be used. The components shown in the figure may be implemented by hardware, software, or a combination of software and hardware.

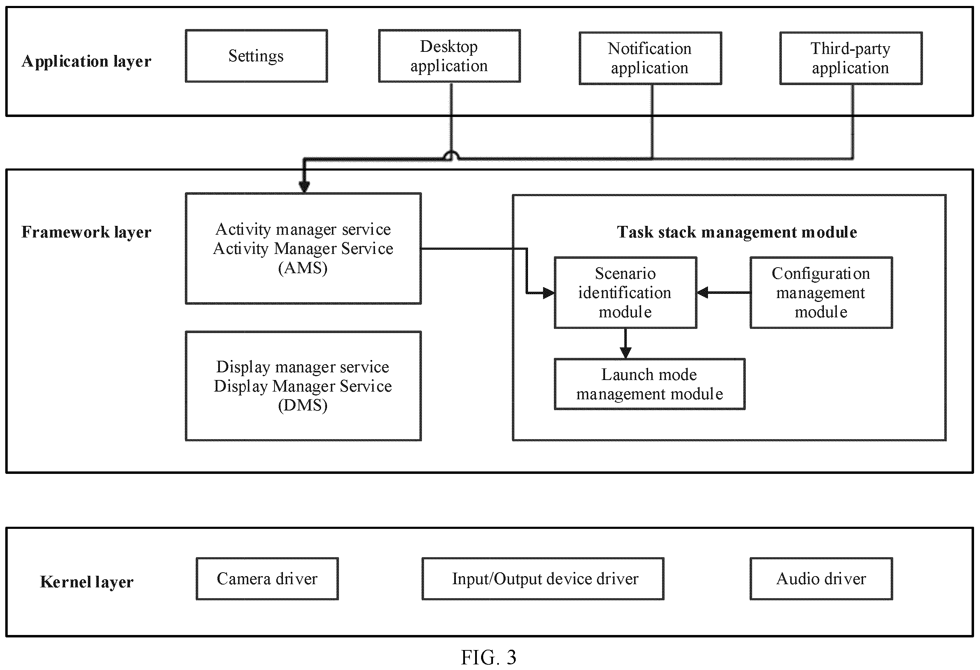

In an example, FIG. 3 is a diagram of a software structure of a terminal device according to an embodiment of this application. As shown in FIG. 3, an operating system of the terminal device may include an application layer, a framework layer (framework, FWK), and a driver layer.

The application layer may include a series of applications, for example, a Settings application, a desktop application, and a third-party application shown in FIG. 3. The third-party application at the application layer may include but is not limited to a word processing system (word processing system, WPS), Mail, Notes, Camera, Gallery, Calendar, Call, Map, Navigation, Bluetooth, Video, Messaging, and the like. For ease of description, the application is briefly referred to as an application below. The application may be a native application (for example, an application integrated in the operating system) or function, or an application downloaded and installed by a user from an application store. This is not limited in this embodiment of this application. The Settings application is generally a system-level application, and the user may perform system setting by using the Settings application. The desktop application may be understood as a home screen of the terminal device. When the user triggers start of a new interface on the home screen, the Settings application, the third-party application, or the like, an activity manager service (Activity Manager Service, AMS) starts a corresponding activity (Activity). In embodiments provided in this application, the activity (activity) may also be referred to as an application component. The application framework layer provides an application programming interface (application programming interface, API) and a programming framework for an application at the application layer. As shown in FIG. 3, the framework layer may include the activity manager service (Activity Manager Service, AMS), a display manager service (Display Manager Service, DMS), and a task stack management module. The AMS is mainly responsible for window activity management, and the DMS is mainly configured to manage information such as a screen object of the terminal device, for example, creating a virtual screen or mapping a virtual screen. In embodiments provided in this application, the task stack management module includes a scenario identification module, a configuration management module, and a start mode management module. The scenario identification module is mainly configured to determine a start manner of the activity (activity) with reference to preset configuration information and a current device status. The configuration management module is mainly configured to store the preset configuration information, for example, whether the user enables a floating-window function of a specific application, whether the application has app multiplier, or whether the application supports floating-window display. In addition, the configuration management module may further store interface jump combination settings. For example, when the user configures that when an interface 2 is newly started from an interface 1, the interface 2 needs to be presented in a form of floating window.

The kernel layer is a layer between hardware and software. The kernel layer may include a camera driver, an input/output device driver (for example, a keyboard driver, a touchscreen driver, or a microphone driver), an audio driver (for example, a headset driver or a speaker driver), a sensor driver, a Bluetooth driver, and the like. The camera driver is configured to invoke and control camera hardware by using a driver, for example, implement image shooting control (for example, starting shooting, pausing shooting, or ending shooting) and shooting parameter adjustment.

It should be noted that FIG. 3 is merely an example of the diagram of the software structure of the terminal device, and merely layers and software modules related to the solutions of this application are simply enumerated. During actual application, the operating system of the terminal device may further include another layer, and each layer may further include another software module configured to realize one or more functions or services. This is not specifically limited in this embodiment of this application.

It should be noted that, that an interface that is displayed only in a portrait orientation of the device is started when the device is placed in a landscape orientation is not limited in this application. Alternatively, an interface that is displayed only in a landscape orientation of the device may be started when the device is placed in a portrait orientation. A principle is similar. Details are not described in this application. The following describes the method provided in embodiments of this application by using an example in which a tablet device is placed in a landscape orientation and a system orientation is a landscape orientation.

### Scenario 1: Start a new interface across applications

Step S401: A terminal device receives a user operation, and triggers start of a new application interface that belongs to another application.

Before step S401, the terminal device may be on a main screen or a home screen, or the terminal device already displays an application interface of a specific application, where the application interface is presented in a form of full screen, floating window, or the like. It should be noted that both the home screen and the specific application may be referred to as a current application in step S401. In step S401, start of the new application interface that belongs to the another application is triggered from an application interface of the current application.

The user operation may be an operation of tapping a specific application icon on the home screen, an operation of tapping a specific control button on the currently displayed application interface, an operation of tapping a message notification of the another application when the message notification is received, or an operation of sliding out a sidebar and tapping a specific application icon on the sidebar. A manner of triggering start of the new application interface that belongs to the another application is not specifically limited in this application.

Step S402: The terminal device determines whether the new application interface supports app multiplier.

For example, the terminal device may obtain configuration information based on an identifier of the application to which the application interface belongs or component information corresponding to the application interface, to determine whether the new application interface supports the app multiplier.

When the new application interface supports the app multiplier, the new application interface is displayed in the center, with blank space or a blur applied on both sides of a screen. When the new application interface does not support the app multiplier, step S403 is performed.

Step S403: The terminal device determines whether the new application interface supports display in a landscape orientation.

It should be noted that, in this embodiment of this application, an example in which the device is placed in a landscape orientation is used. Therefore, in step S403, it is determined whether the newly started application interface supports display in the landscape orientation. When the device is currently placed in a portrait orientation, in step S403, it is determined whether the new application interface supports display in a portrait orientation. Before step S403 is performed, the terminal device obtains a device orientation in advance.

The terminal device may obtain the configuration information based on the identifier of the application to which the application interface belongs or the component information corresponding to the application interface, to determine whether the new application interface supports display in the landscape orientation. For example, when a display orientation of a specific application is set to "portrait", an application interface of the application supports display in a portrait orientation, as shown in FIG. 1(b). When a display orientation of a specific application is set to "landscape", an application interface of the application supports display in a landscape orientation, as shown in FIG. 1(a).

When the terminal device determines that the new application interface supports display in the landscape orientation, the terminal device may display the new application interface in full screen. When the terminal device determines that the new application interface does not support display in the landscape orientation or supports only display in the portrait orientation, step S403 may be performed.

Step S404: The terminal device determines whether the new application interface supports a floating window.

The terminal device may obtain configuration information based on the identifier of the application to which the application interface belongs or the component information corresponding to the application interface, to determine whether the new application interface supports floating-window display.

When the new application interface supports the floating window, the terminal device presents the new application interface in a form of floating window. In some embodiments, the new interface is initially set to not support display in a landscape orientation or support only display in a portrait orientation. For example, a display orientation of the interface is set to "portrait". After the interface is started in a floating-window mode, a system orientation remains in a landscape orientation, but a current orientation of the application being "portrait" may be notified, and then content of the application interface may be presented in a floating window container, to implement display in a landscape orientation in the floating window.

It should be noted that, in the steps of the foregoing embodiment, whether the application interface supports the app multiplier, whether the application interface supports display in the landscape orientation, and whether the application interface supports the floating window are sequentially determined. In practice, step S402 or step S403 may be omitted, or both step S402 and step S403 are omitted.

In addition, in the foregoing embodiment, whether the app multiplier is supported, whether the landscape orientation is supported, and whether the floating window is supported are separately determined sequentially. Alternatively, the terminal device may directly obtain all configuration information, and directly determine, based on the configuration information and the current orientation in which the terminal device is placed, to start the new application interface in the form of floating window.

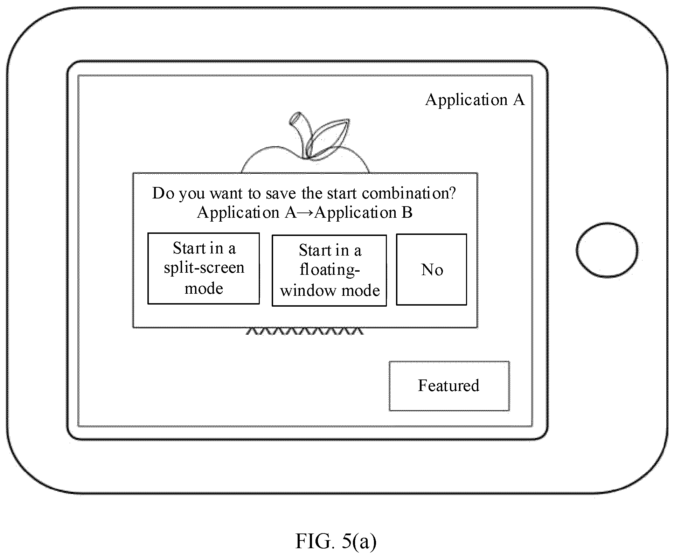

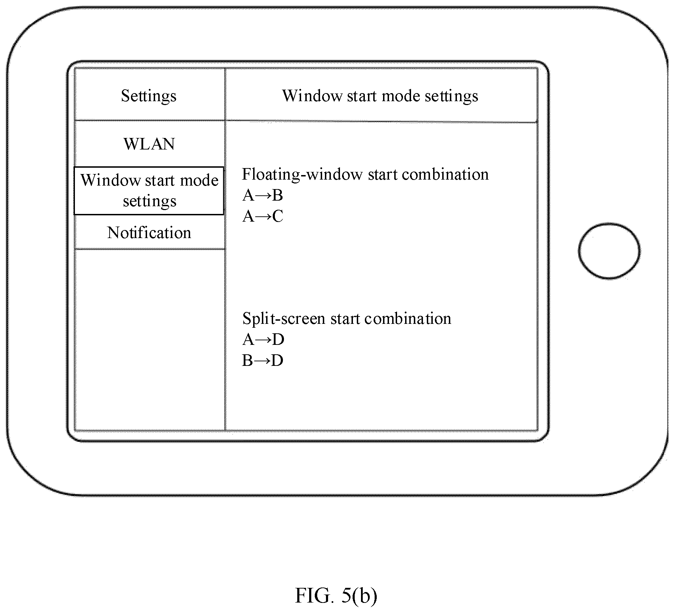

In another embodiment, after receiving the user operation, the terminal device may alternatively enter a split-screen scenario directly. For example, when the message notification from the another application is received, the message notification is tapped to directly enter the split-screen scenario, or the message notification is dragged to trigger entrance to the split-screen scenario, or a specific page jump control on the current application interface is tapped to directly trigger entrance to the split-screen scenario. The foregoing split-screen scenario may be specifically that the application interface of the current application is displayed on a left half of the device screen, and the newly started application interface of the another application is displayed on a right half of the device screen. Alternatively, the current application has two applications that are already in a split-screen state. After a first user operation is received, the new application interface is displayed on the right half of the device screen, and the previous two applications are respectively displayed in an upper area and a lower area of the left half of the device screen. Division into specific screen areas in a split-screen mode after the new interface is started is not specifically limited in this application. In this embodiment provided in this application, a user or a system may configure a start mode. As shown in FIG. 5(a) and FIG. 5(b), when the user triggers start of a new application interface that belongs to another application, the system may display a prompt box for the user to select a manner of starting the new application interface, and record the selection of the user, so that the new application interface can be directly started in this manner subsequently. For example, when an interface of an application B is started, the user may select to save start in a split-screen mode or start in a floating-window mode. In addition, the user may also access window start mode settings through a "Settings" application, to directly set a display manner for jump from each application interface, including start in the form of floating window, start in the split-screen mode, or the like. For example, the user may set a plurality of start mode combinations. For example, during jump from an interface of an application A to the interface of the application B, the interface of the application B is started in the floating-window mode, and during jump from the application A to an interface of an application C, the interface of the application C is started in the floating-window mode. The foregoing start mode combination may also be referred to as configuration information in embodiments of this application.

In embodiments provided in this application, the configuration information is defined in a broad sense, and mainly indicates an attribute of a second application interface. The configuration information records whether the second application interface supports the app multiplier, whether the second application interface supports the landscape orientation, whether the second application interface supports display in the floating window, and the like. In addition, the configuration information may alternatively be configuration information set by the user, for example, a preset start mode combination.

### Scenario 2: Start a new interface in an application

Step S601: A terminal device receives a user operation, and triggers start of a new interface of a current application.

Before step S601, the terminal device may be on a main screen or a home screen, or the terminal device already displays an application interface of a specific application, where the application interface is presented in a form of full screen, floating window, or the like.

The user operation may be an operation of tapping a specific control button on the currently displayed application interface, an operation of tapping a message notification of the application when the message notification is received, or an operation of sliding out a sidebar and tapping an application icon of the application on the sidebar. A manner of triggering start of the new application interface of the current application is not specifically limited in this application.

Step S602: The terminal device determines whether the new interface supports app multiplier.

If the application to which the new interface belongs supports the app multiplier, the terminal device triggers display of the new interface through the app multiplier. To be specific, an interface present before the user operation is received is displayed in a left area of a screen, and the new interface is displayed in a right area of the screen.

If the application to which the new interface belongs does not support the app multiplier, step S603 may be performed.

Step S603: The terminal device determines whether the new interface supports display in a landscape orientation.

It should be noted that, in this embodiment of this application, an example in which the device is placed in a landscape orientation is used. Therefore, in step S603, it is determined whether the newly started application interface supports display in the landscape orientation. When a current orientation in which the device is placed is a portrait orientation, in step S603, it is determined whether the new application interface supports display in a portrait orientation. Before step S603 is performed, the terminal device may obtain a device orientation.

The terminal device may obtain configuration information based on an application identifier of the application to which the application interface belongs or component information corresponding to the application interface, to determine whether the new application interface supports display in the landscape orientation. For example, when a display orientation of a specific application is set to "portrait", an application interface of the application can be displayed only in a portrait orientation, as shown in FIG. 1(b). When a display orientation of a specific application is set to "landscape", an application interface of the application can be displayed only in a landscape orientation, as shown in FIG. 1(a).

When the terminal device determines that the new application interface supports display in the landscape orientation, the terminal device may display the new application interface in full screen. When the terminal device determines that the new application interface does not support display in the landscape orientation or supports only display in the portrait orientation, step S504 may be performed.

Step S604: The terminal device determines whether the new application interface supports a floating window.

When the new application interface supports the floating window, the terminal device presents the new application interface in the landscape orientation in a form of floating window. In some embodiments, the new interface is initially set to not support display in a landscape orientation or support only display in a portrait orientation. For example, a display orientation of the interface is set to "portrait". After the interface is started in a floating-window mode, a system orientation remains in a landscape orientation, but a current orientation of the application being "portrait" may be notified, and then received content of the application interface may be presented in a floating window container, to implement display in a landscape orientation in the floating window.

It should be noted that, in some embodiments, the foregoing steps do not need to be sequentially performed. For example, steps S601, S602, and S604 may be performed, or step S604 is directly performed after step S601 is performed. In other words, after the user operation is received, the new interface started in the application may be directly started in the floating-window mode. Similar to Scenario 1, after receiving the user operation, the terminal device may alternatively enter a split-screen scenario directly. In other words, steps S602 to S604 are not performed. For example, when a message notification of a specific social application is received on a news interface of the application, the message notification is tapped, so that entrance to the split-screen scenario can be directly triggered. Specifically, the news interface of the social application may be displayed in a left area of the device, and a message page of the social application may be displayed in a right area of the device. A layout of an application interface after screen splitting is performed is not specifically limited in this application.

In addition, similar to Scenario 1, a user may also set a start mode for the new interface started in the application. For example, the user may set that, in a specific application, a file is opened and started in the form of floating window, or a news interface is started in a form of split screen. The foregoing start mode combination may also be referred to as configuration information in embodiments of this application.

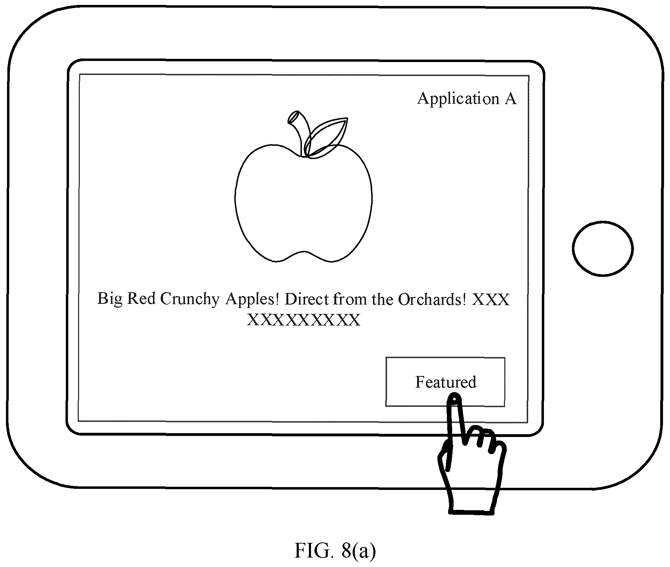

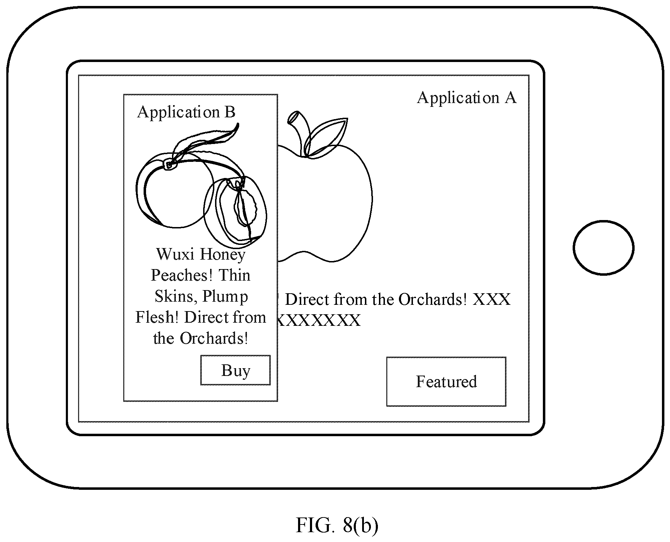

FIG. 8(a) and FIG. 8(b) are a specific example of starting the new interface in a cross-application scenario. The interface of the application B does not support display in a landscape orientation, and supports only display in a portrait orientation. As shown in FIG. 8(a) and FIG. 8(b), when a "Featured" control is tapped on the interface of the application A, the newly started interface of the application B is presented in the form of floating window, and the user does not need to rotate the device. Further, this solution may be further applied to scenarios such as cross-application sharing and cross-application price comparison, to improve user experience of the terminal device in a cross-application scenario.

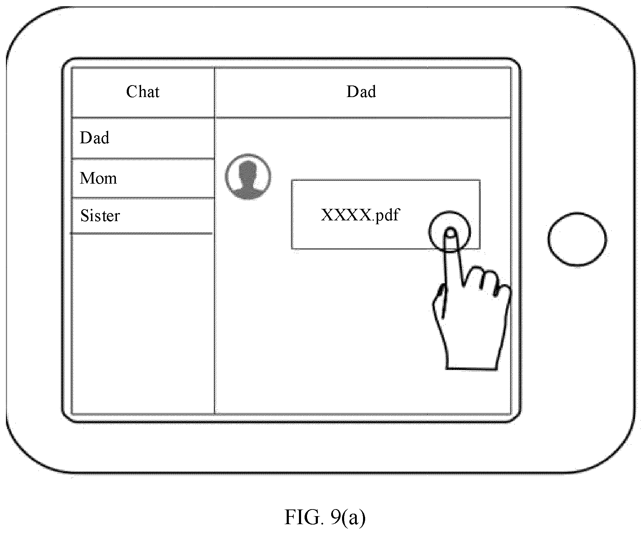

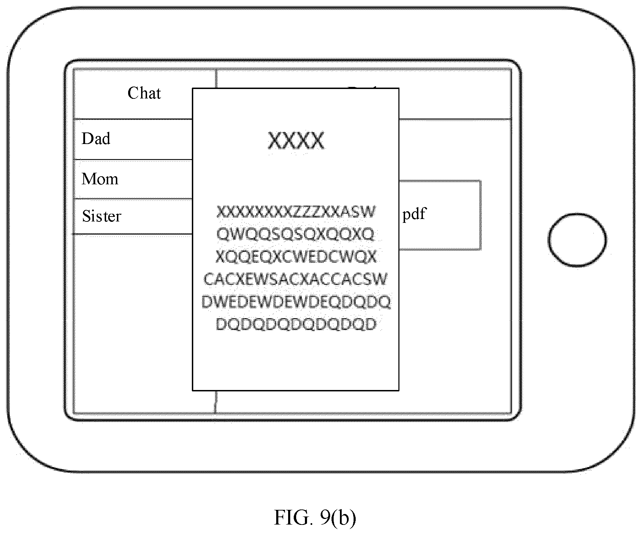

FIG. 9(a) and FIG. 9(b) are a specific example of starting the new interface in the application. In a chat application, a file sent by a friend is tapped, and the file may be directly opened in the form of floating window. The user can view chat content and file content at the same time, so that browsing efficiency is improved.

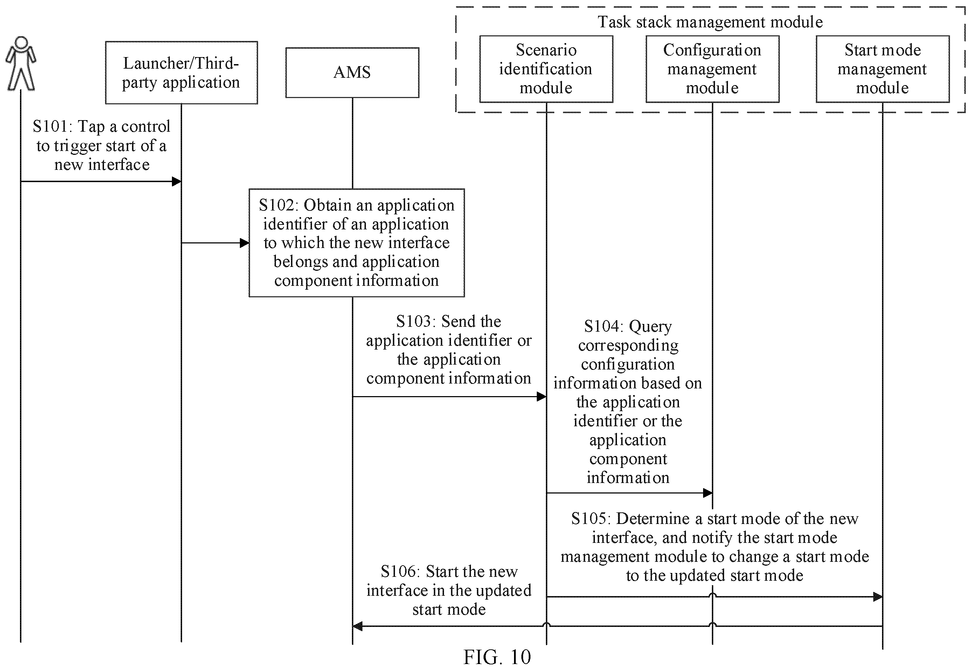

With reference to FIG. 10, a specific implementation of a terminal device when a new interface is started is described. The new interface may be a new intra-application interface in the application or a new cross-application interface. A software module of the terminal device specifically includes an AMS and a task stack management module. The task stack management module includes a scenario identification module, a configuration management module, and a start mode management module.

Step S101: A user taps a control to trigger start of a new interface.

In this embodiment, the new interface may be a new cross-application interface, or may be a new interface that belongs to the same application.

The user may tap a specific application icon on a desktop application to trigger start of the new interface, or may tap, in a state in which a specific application interface is started, a control on the application interface to trigger start of the new interface.

Step S102: The AMS obtains an application identifier of an application to which the new interface belongs or application component information.

When the user taps the control, the AMS monitors an event of starting the new interface, and determines the application identifier of the application to which the new interface belongs and the application component information. The application identifier indicates the application to which the new interface specifically belongs, and the application component information is used to identify a specific activity, for example, a name, an attribute, and a type of the activity.

Step S103: The AMS sends the application identifier and the application component information obtained in step S102 to the scenario identification module.

Step S104: The scenario identification module obtains configuration information of the new interface from the configuration management module based on the application identifier or the application component information.

For example, when a query is performed based on the application identifier, the configuration management module stores configuration information of an application A. For example, whether the application A supports an app multiplier mode, whether the application A supports display in a landscape orientation, or whether the application enables display in a floating window. For example, all interfaces of the application A are configured to be started in a form of floating window. For another example, the application A is configured to be started in a form of floating window when the device is in a landscape state.

For example, when a query is performed based on the application component information, the configuration management module stores configuration information of a specific activity in the application A. For example, a type-a activity in the application A is started in the form of floating window, or a type-b interface in the application A is started in a form of split screen. Alternatively, a specific activity is configured to be started in a floating-window mode when the device is in the landscape state. Alternatively, the configuration information indicates whether the activity has the app multiplier mode, whether the activity supports display in the landscape orientation, and whether the activity supports display in the floating window.

Step S105: The scenario identification module determines a start manner of the new interface based on the queried configuration information and a current device orientation, and notifies the start mode management module to change a start mode to an updated start mode.

The scenario identification module obtains the current device orientation, and an example in which the device is placed in a landscape orientation is used in this application. It should be noted that an occasion for obtaining the device orientation by the scenario identification module is not specifically limited in this application.

The scenario identification module determines the start manner of the new interface based on the obtained configuration information and the current device orientation. In a cross-application scenario, the scenario identification module may first determine, with reference to the configuration information, whether it is preset that split-screen display is required in a current scenario (from the application A to an application B). If it is not preset, whether the new interface supports display in a landscape orientation may be further determined. If display in the landscape orientation is not supported, and the application to which the new interface belongs enables/has a floating-window function, it may be determined that the new interface is started in the form of floating window. In a scenario of starting the new interface in the application, the scenario identification module may first determine whether the interface supports display in app multiplier. If display in app multiplier is not supported, whether the interface is displayed in a landscape orientation is further determined. If display in a landscape orientation is not supported, and the application to which the new interface belongs enables/has a floating-window function, it may be determined that the new interface is started in the form of floating window.

After determining a new start mode (for example, a split-screen mode or a floating-window mode), the scenario identification module notifies the start mode management module to update the start mode to the new start mode.

Step S106: The AMS starts the new interface based on the updated start mode.

In this embodiment provided in this application, when the new interface is started (including in the scenario of starting the new interface across applications or the scenario of starting the new interface in the application), a task stack may be created, and an activity corresponding to the new interface is placed in the created task stack, which is independent of an original task stack. Therefore, the new interface may be displayed as an independent task on a multi-task management page, and the user may manually clear the task. With reference to FIG. 8(b), an interface of the application A in the background and an interface of the application B displayed in a floating window belong to different task stacks. With reference to FIG. 9(b), a chat interface in the background and a file page in a floating window also belong to different task stacks.

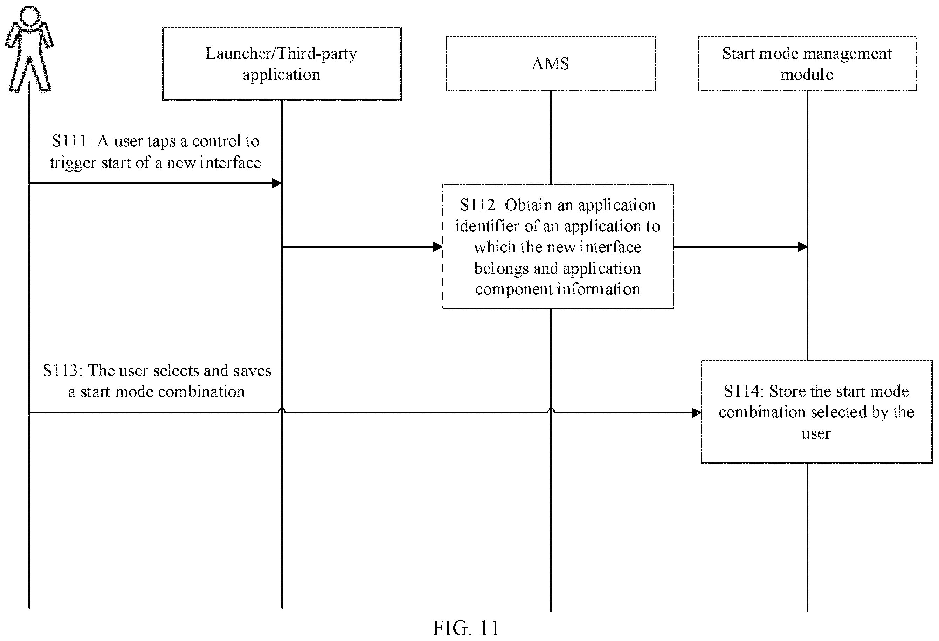

With reference to FIG. 11 and FIG. 5(a), a specific implementation of saving a start mode combination in embodiments of this application is described. In FIG. 11, when a user triggers start of an interface, a system pops up a window for the user to select a start mode and stores the selection.

Step S111: The user taps a control to trigger start of a new interface.

Step S112: An AMS identifies the trigger event, and determines an application identifier of an application to which the new interface belongs or application component information.

Step S113: The user selects a start mode combination of the new interface, and sends the start mode combination to a start mode management module by using the AMS.

Step S114: The start mode management module stores the start mode combination selected by the user.

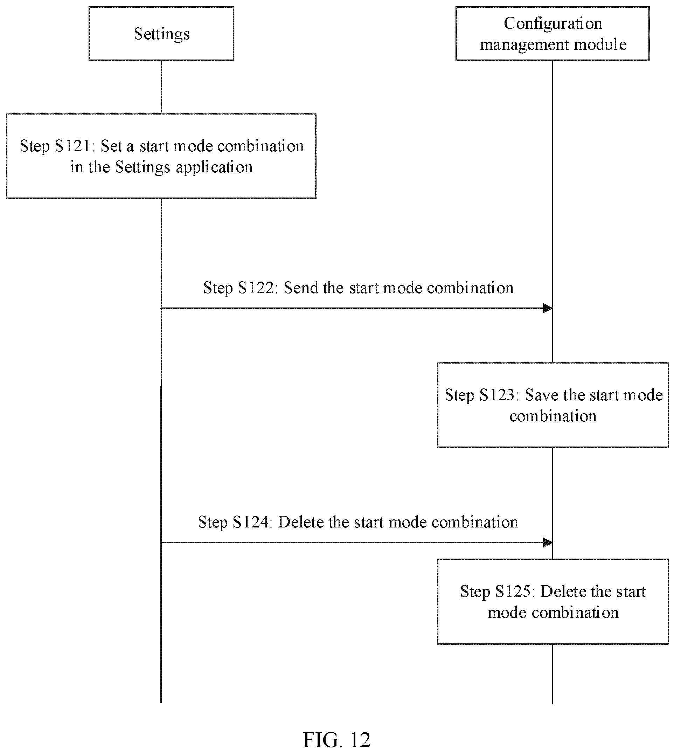

With reference to FIG. 12 and FIG. 5(b), another specific implementation of saving a start mode combination in embodiments of this application is described. In FIG. 12, a start mode combination is set or deleted by using a "Settings" application.

Step S121: The user sets the start mode combination by using the "Settings" application.

Step S122: The "Settings" application sends the start mode combination to a configuration management module.

Step S123: The configuration management module stores the received start mode combination. Step S124: The user deletes the start mode combination by using the "Settings" application.

Step S125: The configuration management module deletes the corresponding start mode combination based on received notification.

This application further provides an electronic device. A terminal device includes one or more processors and one or more memories. The one or more memories are coupled to the one or more processors. The one or more memories are configured to store computer program code. The computer program code includes computer instructions. The one or more processors invoke the computer instructions, to enable the electronic device to perform the foregoing method.

This application further provides a computer-readable storage medium, including instructions. When the instructions are run on an electronic device, the electronic device is enabled to perform the foregoing method.

It should be understood that the solutions in embodiments of this application may be properly combined for use, and explanations or descriptions of terms in embodiments may be cross-referenced or explained in embodiments. This is not limited.

It should be understood that sequence numbers of the foregoing processes do not mean execution sequences in various embodiments of this application. The execution sequences of the processes should be determined based on functions and internal logic of the processes, and should not be construed as any limitation on the implementation processes of embodiments of this application. It may be understood that, to realize functions of any one of the foregoing embodiments, a terminal device includes corresponding hardware structures and/or software modules for performing the functions. A person skilled in the art should be easily aware that, in this application, the units and algorithm steps in the examples described with reference to embodiments disclosed in this specification can be implemented by hardware or a combination of hardware and computer software. Whether a specific function is performed by hardware or hardware driven by computer software depends on particular applications and design constraints of the technical solutions. A person skilled in the art may use different methods to realize the described functions for each particular application, but it should not be considered that the implementation goes beyond the scope of this application.

In embodiments of this application, the terminal device may be divided into functional modules. For example, each functional module corresponding to each function may be obtained through division, or two or more functions may be integrated into one processing module. The integrated module may be implemented in a form of hardware, or may be implemented in a form of software functional module. It should be noted that, in embodiments of this application, module division is an example, and is merely a logical function division. During actual implementation, another division manner may be used.

It should be further understood that each module in the terminal device may be implemented in a form of software and/or hardware. This is not specifically limited. In other words, the electronic device is presented in a form of functional module. The "module" herein may be an application-specific integrated circuit (ASIC), a circuit, a processor that executes one or more software or firmware programs and a memory, an integrated logic circuit, and/or another component that can provide the foregoing functions.

In an optional manner, when the software is used to implement data transmission, the data transmission may be implemented completely or partially in a form of computer program product. The computer program product includes one or more computer instructions. When the computer program instructions are loaded and executed on a computer, all or some of procedures or functions in embodiments of this application are implemented. The computer may be a general-purpose computer, a dedicated computer, a computer network, or another programmable apparatus. The computer instructions may be stored in the computer-readable storage medium, or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a digital video disk (digital video disk, DVD)), a semiconductor medium (for example, a solid-state drive (solid state disk, SSD)), or the like.

Method or algorithm steps described with reference to embodiments of this application may be implemented by hardware, or may be implemented by a processor by executing software instructions. The software instructions may include a corresponding software module. The software module may be stored in a RAM memory, a flash memory, a ROM memory, an EPROM memory, an EEPROM memory, a register, a hard disk, a removable hard disk, a CD-ROM, or a storage medium in any other form well-known in the art. For example, the storage medium is coupled to the processor, so that the processor can read information from the storage medium and write information to the storage medium. Certainly, the storage medium may alternatively be a component of the processor. The processor and the storage medium may be disposed in an ASIC. In addition, the ASIC may be located in the terminal device. Certainly, the processor and the storage medium may alternatively exist as discrete components.

The foregoing descriptions about implementations allow a person skilled in the art to clearly understand that, for the purpose of convenient and brief description, division of the foregoing functional modules is merely used as an example for description. During actual application, the foregoing functions can be allocated to different functional modules and implemented as required. In other words, an inner structure of an apparatus is divided into different functional modules to realize all or some of the functions described above.

## Claims

**1.** A display method, applied to a terminal device placed in a landscape orientation, wherein the method comprises:
displaying a first application interface, wherein the first application interface comprises a control for triggering start of a second application interface;
receiving a user operation performed on the control; and
when the second application interface does not support display in a landscape orientation or supports only display in a portrait orientation, displaying the second application interface in the landscape orientation in a floating window in response to the user operation.

**2.** The method according to claim 1, wherein the second application interface does not support an app multiplier mode.

**3.** The method according to claim 1 or 2, wherein the first application interface belongs to a first application, the second application interface belongs to a second application, and the first application and the second application are different applications.

**4.** The method according to claim 1 or 2, wherein the first application interface and the second application interface belong to a same application.

**5.** The method according to any one of claims 1 to 4, wherein before the displaying the second application interface in a floating window in response to the user operation, the method further comprises:
obtaining configuration information of the second application interface, wherein the configuration information indicates whether the second application interface supports floating-window display; and
when the configuration information indicates that the second application interface supports the floating-window display, displaying the second application interface in the floating window.

**5.** The method according to claim 4, wherein the configuration information of the second application interface further indicates whether the second application interface supports app multiplier, or the configuration information of the second application interface further indicates that the second application interface does not support display in the landscape orientation or supports only display in the portrait orientation.

**6.** The method according to any one of claims 1 to 5, wherein before the displaying the second application interface in a floating window, the method further comprises:
obtaining start mode combination information, wherein the start mode combination information indicates to start the second application interface in a floating-window mode when jumping from the first application interface to the second application interface; and
displaying the second application interface in the floating window based on the start mode combination information.

**7.** The method according to claim 6, wherein the start mode combination information is generated based on previous selection of a user, or the start mode combination information is preset through system settings.

**8.** The method according to any one of claims 1, 2, and 4 to 7, wherein the first application interface is a home screen, and the user operation is an operation of tapping an application icon on the home screen, or the user operation is an operation of tapping a system notification.

**9.** The method according to any one of claims 1 to 3 and 5 to 7, wherein the first application interface is an interface of the first application, and the user operation is an operation of tapping a specific control on the first application interface.

**10.** The method according to any one of claims 1 to 9, wherein the method further comprises:
in response to the user operation, creating a task stack, and placing the second application interface in the created task stack.

**11.** An electronic device, wherein the electronic device comprises one or more processors and one or more memories; and the one or more memories are coupled to the one or more processors, the one or more memories are configured to store computer program code, the computer program code comprises computer instructions, and the one or more processors invoke the computer instructions, to enable the electronic device to perform the method according to any one of claims 1 to 10.

**12.** A computer-readable storage medium, comprising instructions, wherein when the instructions are run on an electronic device, the electronic device is enabled to perform the method according to any one of claims 1 to 10.

**13.** A computer program product, wherein when the computer program product runs on an electronic device, the electronic device is enabled to perform the method according to any one of claims 1 to 10.
